(19) Europäisches Patentamt
European Patent Office
Office européen des brevets

(11) Publication number: **0 077 110 A1**

(12) **EUROPEAN PATENT APPLICATION**

(21) Application number: **82301824.7**

(22) Date of filing: **06.04.82**

(51) Int. Cl.³: **A 01 M 7/00**

(30) Priority: **07.10.81 CA 387489**

(43) Date of publication of application: **20.04.83 Bulletin 83/16**

(84) Designated Contracting States: **DE FR GB IT**

(71) Applicant: **White McKee Inc., Industrial Road, Elmira Ontario (CA)**

(72) Inventor: **Rogers, Ramon Barry, 517 Upper Queen Street, London Ontario, N6C 3T8 (CA)**

(74) Representative: **Dayneswood, Trevor et al, ABEL & IMRAY Northumberland House 303-306 High Holborn, London, WC1V 7LH (GB)**

(54) **Boom stabilizing system.**

(57) The system comprises a linkage arrangement between a spray boom and carrying vehicle, including a pair of first links 11, 12 connected to respective levers 15, 16 which, in turn, are connected by a second link 21 in a symmetrical relationship. By this system the spray boom remains generally parallel to a horizontal or sloping ground surface and the linkage system absorbs transitory shocks resulting from ground surface irregularities.

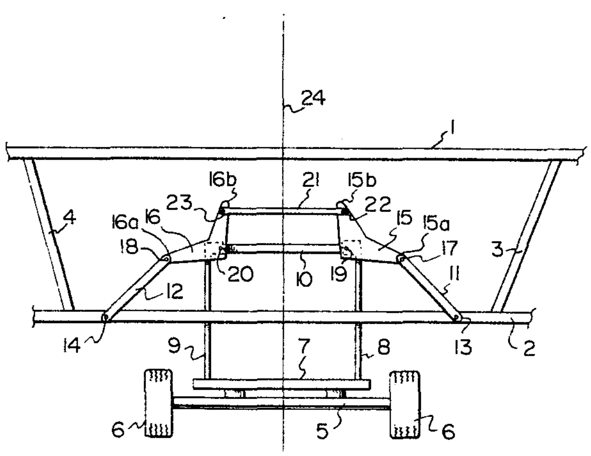


EP 0 077 110 A1

Boom stabilizing system

0077110

This invention relates to a new and useful improvement in stabilizing systems for centrally supported spray or distribution booms (hereinafter called spray booms) and, in particular, spray booms of the type used for applying liquid fertilizer, insecticides or other products to the ground or to crops in agricultural operations.

Generally in this type of operation, a truck, tractor, trailer or other vehicle carries a tank containing the liquid chemical or substance which is to be applied to the field or crops. On the rear of the trailer or other carrying vehicle is mounted a horizontal boom with spray heads therealong. The boom may be unitary or may be composed of sections which are adapted to retract or be raised so that the apparatus may move easily from one field to another, in corners of fields or when placed in storage. The product to be distributed on the ground or on crops is pumped from the tank to spray heads located along the boom in such a manner as to produce a uniform application of the product at a specified concentration. As long as the spray boom moves across a horizontal, smooth field, there is no difficulty as a result of the position boom because, throughout its length, it remains at a constant distance from the ground.

A difficulty with spraying booms is the undesirable movement of the boom caused by rolling movements of the vehicle on which it is carried, this being particularily acute where the boom is fixed in position relative to the vehicle. Where the spraying boom is not maintained substantially parallel to the ground, there is a resultant uneven application of

BAD ORIGINAL

fertilizer, herbicide, pesticide or other product. If one end part of the boom takes up a position closer to the ground, the application rate may be too great directly at the spray heads on that end of the boom while, between those heads, ground areas may be missed altogether. At the same time the opposite end of the boom takes up a position too far away from the ground surface resulting in an application rate which is too low resulting in inadequate coverage. At the same time, variation of the height of the spray boom can result in exacerbated wind drift problems with consequent enviromental damage.

However if a wheel of the carrying vehicle encounters a rock or hole, the vehicle may roll to one side thus forcing the boom out of position. In an extreme case with a very long boom, the end of the boom may strike the ground resulting in damage to the boom itself.

An additional problem is that on a hill-side with the carrying vehicle travelling across the slope the boom should roll with the vehicle and not remain horizontal. If the boom does not follow the roll of the vehicle the up-hill end of the horizontally orientated boom would be too close to the ground surface while the down-hill end of the boom would be too far away from the ground surface. As a result, a boom stabilizing system is needed to hold the boom normally at a fixed orientation relative to the carrying vehicle while preventing transient rolling matters of the vehicle from disturbing the boom's normal orientation.

BAD ORIGINAL

According to one aspect of the present invention, there is provided a boom stabilizing system comprising linkage adapted to join a boom to a carrying vehicle, comprising two first links pivotally connected to the boom at spaced points symmetrically thereon, two allochiral levers pivotally connected at respective first ends thereof to respective ones of the first links and pivotally connected at respective fulcrum points to the carrying vehicle, and a second link pivotally connected at its opposite ends to respective ones of the levers at second ends thereof.

For the purpose of illustration, but not of limitation, an embodiment of the invention is hereinafter described with reference to the accompanying drawings, in which:

Figure 1 shows a schematic rear view of the boom stabilizing system;

Figure 2 represents the vehicle and boom on level ground,

Figure 3 represents the vehicle and boom when a wheel encounters a localized irregularity on the ground;

Figure 4 represents the vehicle and boom as it proceeds transversely across a hill-side.

Referring to Figure 1, a boom comprising an upper element 1 and a lower element 2 together with transverse supporting elements 3, 4, is shown. The illustrated boom is a substantially rigid structure or although in other embodiments it maybe composed of articulated sections which permit the boom to be collapsed for ease of movement, for example from one field to another.

BAD ORIGINAL

The boom is attached through a linkage system to a carrying vehicle having an axle assembly 5 on the ends of which are wheels 6. A rigid frame is attached to the generally horizontal axle assembly 5 by bottom frame member 7. The frame also includes vertical side members 8 and 9 and may include a top frame member 10. The distance between the top ends of side frame members 8 and 9 is constant and the top frame member 10 may be present to provide rigidity.

Two first links 11 and 12 are connected to the boom at spaced points symmetrically thereon by pivot connections 13 and 14, respectively. Links 11 and 12 may pivot about connections 13 and 14, in the same vertical plane in which the boom extends, but the links are not capable of rotation in other planes.

Links 11 and 12 are connected, respectively, to allochiral bell-crank levers 15 and 16 at first ends 15a and 16a thereof by pivot connections 17 and 18, respectively. Lever 15 is pivotally fixed at fulcrum 19 to a bracket (not shown) which in turn is rigidly fixed to side frame member 8. Similarly, lever 16 is pivotally fixed at fulcrum 20 to a bracket (also not shown) which in turn is rigidly fixed to side frame member 9. A second link 21 has its opposite ends connected to levers 15 and 16 at their second ends 15b and 16b, respectively, with pivot connections 22 and 23, as shown.

The levers and first and second links are located symmetrically about the center line 24 of the boom and vehicle.

When the vehicle with the extended boom moves across a relatively level field, as shown in Figure 2, the boom remains essentially parallel to axles of the vehicle which, in turn, is

BAD ORIGINAL

parallel with the ground, as shown. However when a wheel 6 of the vehicle encounters a stone or other localized obstruction, as shown in Figure 3, the vehicle will momentarily become inclined. Because of its length, if the boom was rigidly affixed to the vehicle, it would take up the position as shown in dashed line 2a. This could result in damage to the boom if it struck the ground or some object on the ground. Also, even if the boom does not strike the ground, where the boom is lower to the ground the rate of application of the spray becomes much more concentrated directly below the spray heads and no spray is applied between the heads. At the same time, where the boom moves higher above the ground, the application rate of the spray is reduced and there may be wind drift problems.

With the linkage of the present invention the boom is isolated from the transient movements resulting from such localized ground irregularities so that the boom remains essentially parallel with the ground surface, as shown at 2 in Figure 3.

Referring again to Figure 1, when the wheel 6 of the vehicle strikes a stone on the ground as shown in Figure 2, side member 8 moves upwardly somewhat and tips as the vehicle "rolls" or tilts counterclockwise. This generates a transitory upwards movement of fulcrum 19. This movement will apply an upwards force on the toggle formed by lever 15 and link 11, between fulcrum 19 and pivot connection 13. At the pivot connection 13, this force will be resisted by the considerable

BAD ORIGINAL

inertial of the long boom. This resistance at connection 13 will cause the toggle between fulcrum 19 and connection 13 to straighten, increasing the distance between connections 13 and fulcrum 19, absorbing the transient rolling movement of the vehicle. Because of the symmetry of the linkage system, and the interconnection of the two sides through a four bar linkage with pivots 19, 20, 22 and 23, corresponding but opposite movements occur with lever 16 and the toggle it forms with link 12, decreasing the distance between connections 14 and 20. As the wheel 6 leaves the stone, the opposite action occurs. Also, if the wheel 6, instead of striking a rock, encounters a dip or rut, the opposite action takes place. Thus, the boom, will continue to be generally parallel with the ground surface, the linkage system compensating for the transitory rolling movements of the carrying vehicle.

As shown in Figure 4, when the vehicle moves transversely across a hill-side, it is desirable that the boom remain parallel with the ground surface, as opposed to remaining horizontal. In this situation the boom stabilizing system is not normally subjected to a shock or jolt for which the linkage must mechanically compensate. The horizontal component of the gravitational force acting on the boom and linkage system is not sufficient to cause significant movement and the boom remains essentially parallel with the axle of the vehicle, which, in turn, is generally parallel with the sloping ground surface. Of course, if the vehicle encounters a rock or rut on the hill-side, the linkage will compensate as described above.

It is understood that the vehicle may comprise a

BAD ORIGINAL

separate trailer which is pulled by a truck or tractor or may be self-propelled in which case the axle assembly 5 and wheel 6 merely represent the rear portion of the self-propelled vehicle. In the embodiments shown in Figure 1, the side frame members 8, 9 are exterior of fulcrum points 19, 20 but it is understood that fulcrum points 19, 20 may be collinear with side frame members 8, 9, respectively. The angle between the arms of the lever about fulcrum 19 may be equal to or greater than about 75° but less than 180°, preferably about 80°. The angle forms about connection 17 by the lever arm 17-19 and first link 11 is less than 180° and is preferably greater than 90°.

It is preferred that the distance between connectors 13 and 14 exceeds the distance between connection 17 and 18. The length of the second link 21 may be greater or less than the distance between fulcrum 19 and fulcrum 20. The linkage system could be arranged so that the second link 21 is below the fulcrum points.

[page 8 follows]

BAD ORIGINAL

According to the preferred embodiment, the distance between connectors 13 and 14 is 61 inches (1.55 m), the distance between fulcrum 19 and fulcrum 20 is 28 inches (0.71 m), the distance between fulcrum 19 and connection 22 is 8.5 inches (21.5 cm), the distance between fulcrum 19 and connector 17 is 6 inches (15.25 cm), the length of link 11 is 13.5 inches (34.3 cm), the angle about fulcrum 19 formed by 19-22 and 19-17 is 82°, in the normal position the angle at connector 17 between link 11 and fulcrum 19 and connection 17 is 145°, and in the normal position the angle formed at connector 13 between lower element 2 of the boom and link 11 is 37°.

Arrangements may be made to make it possible to modify the size and location of the links and levers whereby compensatory adjustments are made to the sizes, angles and attachment points of the other components thereby creating a modified linkage system within the scope of the present invention.

BAD ORIGINAL

CLAIMS

1. A boom stabilizing system comprising a linkage adapted to join a boom to a carrying vehicle, comprising two first links (11,12) pivotally connected to the boom at spaced points (13,14) symmetrically thereon, two allochiral levers (15,16) pivotally connected (17,18) at respective first ends (15a,16a) thereof to respective ones of the first links (11,12) and each pivotally connected at respective fulcrum points (19,20) to the carrying vehicle, and a second link (21) pivotally connected (22,23) at its opposite ends to respective ones of the levers (15,16) at second ends (15b,16b) thereof.

2. The linkage system defined in claim 1 wherein the carrying vehicle includes a frame comprising two generally vertical supports connected to the axle assembly and positioned exteriorally from said fulcrum points.

3. A boom stabilizing system comprising a linkage adapted to join a boom to a carrying vehicle, comprising two first links pivotally connected to the boom at spaced points symmetrically thereon, two allochiral bell-cranks pivotally connected at respective first ends thereof to respective ones of the first links and each pivotally connected at respective fulcrum points to the carrying vehicle, and a second link pivotally connected at its opposite ends to respective ones of the bell-cranks at second ends thereof.

4. A linkage system as defined in claim 3 wherein a first angle, at the fulcrum point between the first end and the second

BAD ORIGINAL

end of each of said bell-cranks, is equal to or greater than 45° and less than 180°.

5. The linkage system as defined in claim 4 wherein said first angle is about 80°.

6. The linkage system as defined in claim 3 wherein the distance between the connection points at said second ends of said levers is greater than the distance between said fulcrum points of said levers.

7. The linkage system defined in either of claims 5 or 6 wherein a second angle at said first end of said bell-crank between said fulcrum point and the connection between said first link and said boom is less than 180°.

8. The linkage system defined in either of claims 5 or 6 wherein a second angle at said first end of said bell-crank between said fulcrum point and the connection between said first link and said boom is less than 180° and greater than 90°.

9. The linkage system as defined in any of claims 3, 5 or 6 wherein said second end of said levers are below said fulcrum points.

10. The linkage system as defined in claim 3 wherein the angle at said pivot connection between said first link and said boom is greater than 20° and less than 85°.

BAD ORIGINAL

11. A boom stabilizing system comprising a linkage adapted to join a boom to a carrying vehicle, comprising two first links pivotally connected to the boom at spaced points symmetrically thereon, a four-bar linkage including two allochiral bell-cranks pivotally connected at respective fulcrum points to the carrying vehicle, said bell-cranks including first ends pivotally connected to respective ones of the first links and second ends, forming a part of the four-bar linkage, said second ends being connected by a second link, also a part of the four-bar linkage, said fulcrum points being pivotally connected by the fourth part of the four-bar linkage, whereby said stabilizing system is adapted to absorb transient movements transmitted from the carrying vehicle and the boom remains generally parallel to the ground surface.

0077110

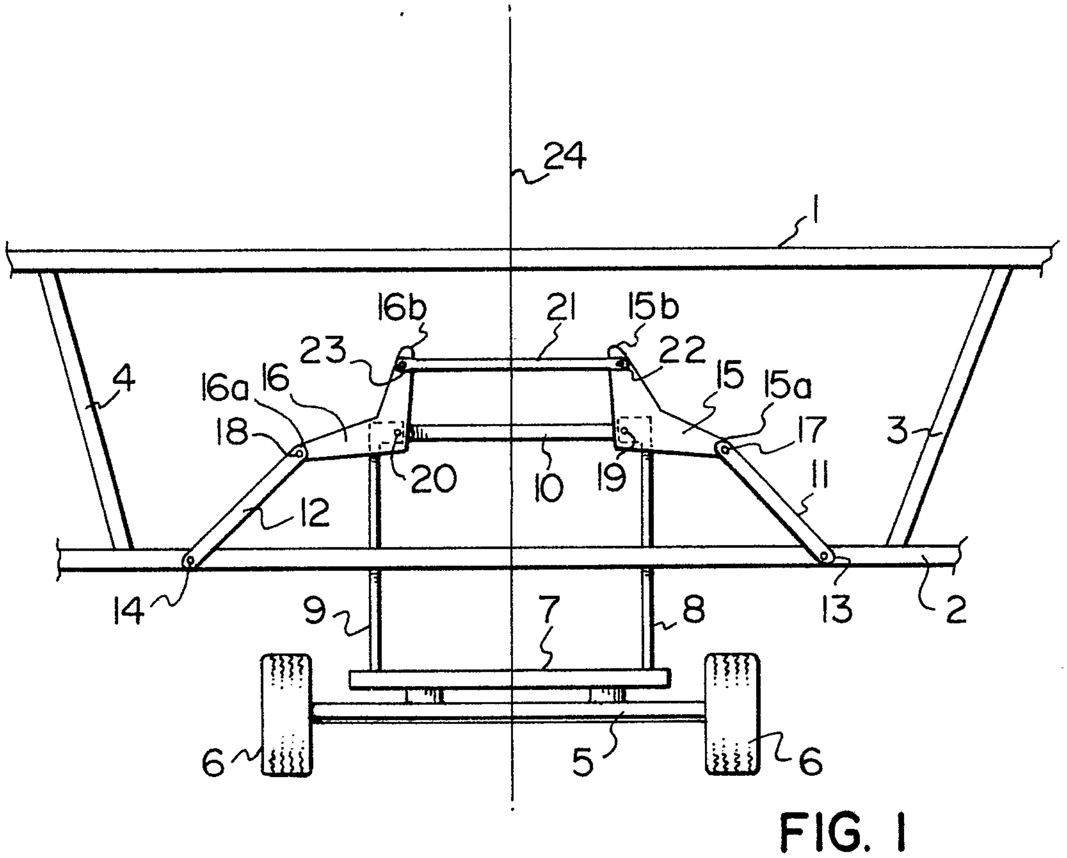


FIG. 1

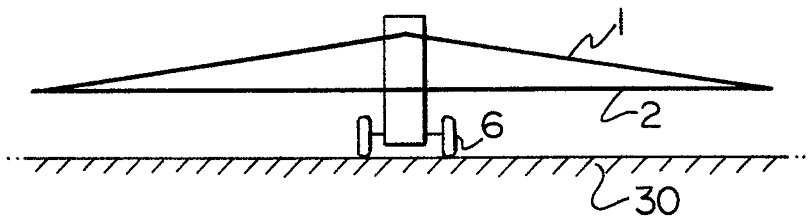


FIG. 2

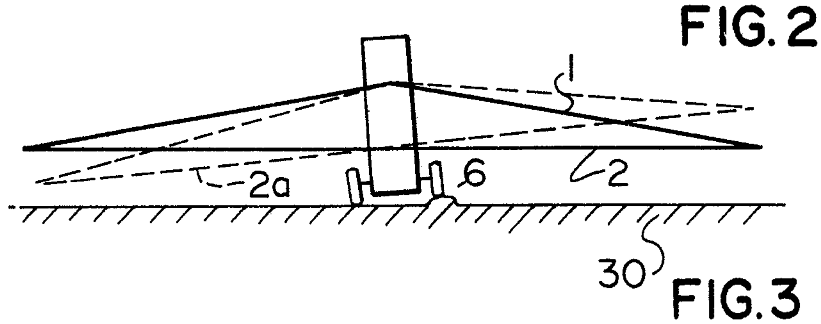


FIG. 3

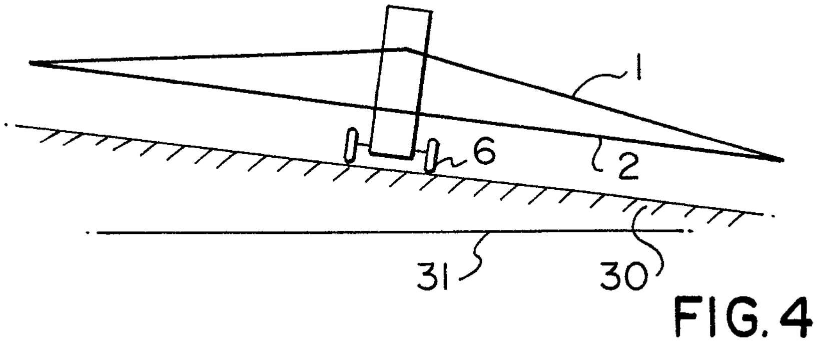


FIG. 4

0077110

European Patent Office

# EUROPEAN SEARCH REPORT

Application number

EP 82 30 1824

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | FR-A-2 423 127 (ETABLISSEMENTS EVRARD) *Page 2, line 9 to page 3, line 26; figures* | 1-3,11 | A 01 M 7/00 |
| A | BE-A- 825 066 (DEMARET) *Page 3, line 17 to page 5, line 18; figures 1-3* | 1,3,11 | |
| A | BE-A- 821 699 (DEMARET) *Page 4, line 23 to page 5, line 23; figures* | 1,3,11 | |
| A | FR-A-2 289 116 (DEMARET) *Page 3, line 22 to page 4, line 24; figures 1,2* | 1-3,10,11 | |
| | ----- | | TECHNICAL FIELDS SEARCHED (Int. Cl. 3) |
| | | | A 01 M 7/00<br>A 01 C 15/00 |

The present search report has been drawn up for all claims

| Place of search | Date of completion of the search | Examiner |
|---|---|---|
| THE HAGUE | 13-01-1983 | MARTIN D.R.V. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82